# EUROPEAN PATENT APPLICATION

(11) **EP 3 247 100 A1**
(43) Date of publication of application: **22.11.2017**
(21) Application number: 17161083.5
(22) Date of filing: 15.03.2017
(51) Int. Cl.: H04N 1/23

(54) **INFORMATION PROCESSING APPARATUS AND IMAGE FORMING APPARATUS**

(30) Priority: 20.05.2016 JP 2016101623
(71) Applicant: Kabushiki Kaisha Toshiba, Tokyo 105-8001 (JP); Toshiba TEC Kabushiki Kaisha, Tokyo 141-0032 (JP)
(72) Inventor: HONDA, Masashi, Shinagawa-ku, Tokyo 141-8562 (JP)
(74) Representative: Takeuchi, Maya

(57) **Abstract**

An information processing apparatus comprises an acquisition section configured to acquire an image; an image processing section configured to carry out an image processing on the image acquired by the acquisition section; an image output section configured to output the image to which the image processing is carried out by the image processing section; a discrimination section configured to discriminate whether or not the image acquired by the acquisition section is a special image on the basis of the image, acquired by the acquisition section, which is different from the image to which the image processing is carried out by the image processing section; and a discrimination output section configured to output a discrimination result of the discrimination section.

## Description

### FIELD

The present invention relates to the field of image processing technologies in general, and embodiments described herein relate more particularly to an information processing apparatus and the corresponding system, an image forming apparatus and the corresponding system, and a method for processing information.

### BACKGROUND

In recent years, with the improvement of an image processing technology, a technology for discriminating whether or not an image (special image) is different from a normal image is developed. Uses of a discrimination result are various; however, in a case in which the special image is an image obtained by scanning a document relating to copy prohibition such as a gold certificate or a confidential article, improvement of security is exemplified.

For example, after a thumbnail image is created from an image obtained by scanning a document, in a case in which the number of parts on the thumbnail image consistent with a discrimination template is equal to or greater than a predetermined number, a technology for discriminating that the image is the special image is known.

Furthermore, there is a case in which an image processing such as a filter processing or a density adjustment and a ground adjustment is used in order to improve image quality and visibility at the time of treating the image. However, in the foregoing technology, since the thumbnail image is changed by the image processing, comparison accuracy with the discrimination template is reduced. Thus, there is a problem that discrimination accuracy of whether the image is the special image is also reduced.

To solve such problems, there is provided an information processing apparatus, comprising:
an acquisition section configured to acquire an image;
an image processing section configured to carry out an image processing on the image acquired by the acquisition section;
an image output section configured to output the image to which the image processing is carried out by the image processing section;
a discrimination section configured to discriminate whether or not the image acquired by the acquisition section comprises a special image on the basis of the image, acquired by the acquisition section, which is different from the image to which the image processing is carried out by the image processing section; and
a discrimination output section configured to output a discrimination result of the discrimination section.

Preferably, the information processing apparatus further comprises:
a generation section configured to generate an image obtained by reducing resolution of the image, acquired by the acquisition section, which is different from the image to which the image processing is carried out by the image processing section, wherein
the discrimination section discriminates whether or not the acquired image is the special image on the basis of the image generated by the generation section.

Preferably still, the image processing section comprises at least one of
a filter processing section which carries out a filter processing,
a density adjustment section which carries out a density adjustment, and
a ground adjustment section which carries out a ground adjustment.

Preferably yet, the information processing apparatus further comprises:
a thumbnail output section configured to output the image generated by the generation section as a thumbnail image.

Suitably, the discrimination result is sent to a special processing section that restricts start of image formation of a copy-prohibited document even if there is an input for instructing copy from a user.

Suitably still, the special image comprises a prohibition image that is copy-prohibited.

The invention also relates to an image forming apparatus, comprising the information processing apparatus as defined above, wherein:
the acquisition section configured to acquire an image of a document;
the image output section comprises a forming section configured to form the image to which the image processing is carried out by the image processing section on a medium; and
the discrimination output section comprises a control section configured to carry out special control to the forming section if the discrimination section discriminates that the acquired image is the special image.

The invention further relates to an information processing system, comprising:
an acquisition means configured to acquire an image;
an image processing means configured to carry out an image processing on the image acquired by the acquisition means;
an image output means configured to output the image to which the image processing is carried out by the image processing means;
a discrimination means configured to discriminate whether or not the image acquired by the acquisition means comprises a special image on the basis of the image, acquired by the acquisition means, which is different from the image to which the image processing is carried out by the image processing means; and
a discrimination output means configured to output a discrimination result of the discrimination means.

The invention also concerns an image forming system, comprising the information processing system as defined above, wherein
the acquisition means configured to acquire an image of a document;
the image output means comprises a forming means configured to form the image to which the image processing is carried out by the image processing means on a medium;
and
the discrimination output section comprises a control means configured to carry out special control to the forming means if the discrimination means discriminates that the acquired image is the special image.

The invention further concerns an information processing method, comprising:
acquiring an image;
carrying out an image processing on the image acquired;
outputting the image to which the image processing is carried out;
discriminating whether or not the image acquired comprises a special image on the basis of the acquired image, which is different from the image to which the image processing is carried out; and
outputting a discrimination result.

Preferably, the information processing method further comprises:
generating an image obtained by reducing resolution of the acquired image, which is different from the image to which the image processing is carried out; and
discriminating whether or not the acquired image is the special image on the basis of the image generated.

Preferably still, image processing comprises at least one of
filter processing which carries out a filter processing,
density adjusting which carries out a density adjustment, and
ground adjusting which carries out a ground adjustment.

Preferably yet, the information processing method further comprises:
outputting the generated image as a thumbnail image.

Suitably, the information processing method further comprises:
restricting start of image formation of a copy-prohibited document even if there is an input for instructing copy from a user.

Suitably further, the special image comprises a prohibition image that is copy-prohibited.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a block diagram illustrating a constitution of an MFP according to an embodiment 1;
Fig. 2 is a block diagram illustrating a physical constitution of a discrimination processing apparatus;
Fig. 3 is a block diagram illustrating a constitution of the discrimination processing apparatus;
Fig. 4 is a flowchart illustrating a MFP control processing;
Fig. 5 is a flowchart illustrating an image process and a discrimination processing;
Fig. 6 is a flowchart illustrating a prohibition information detection processing;
Fig. 7 is a diagram illustrating an example of a prohibition pattern;
Fig. 8 is a diagram illustrating the flow of a used image;
Fig. 9 is a diagram illustrating an example of the image;
Fig. 10 is a diagram illustrating an example of the flow of an image in another apparatus;
Fig. 11 is a diagram illustrating an example of the image in another apparatus;
Fig. 12 is a block diagram illustrating a constitution of a discrimination processing apparatus according to an embodiment 2;
Fig. 13 is a diagram illustrating the flow of a used image;
Fig. 14 is a diagram illustrating an example of the used image;
Fig. 15 is a block diagram illustrating a constitution of a discrimination processing apparatus according to an embodiment 3;
Fig. 16 is a diagram illustrating the flow of a used image;
Fig. 17 is a diagram illustrating an example of the used image; and
Fig. 18 is a block diagram illustrating a constitution of an MFP according to a modification.

### DETAILED DESCRIPTION

In accordance with an embodiment, an information processing apparatus comprises an acquisition section configured to acquire an image; an image processing section configured to carry out an image processing on the image acquired by the acquisition section; an image output section configured to output the image to which the image processing is carried out by the image processing section; a discrimination section configured to discriminate whether or not the image acquired by the acquisition section is a special image on the basis of the image, acquired by the acquisition section, which is different from the image to which the image processing is carried out by the image processing section; and a discrimination output section configured to output a discrimination result of the discrimination section.

In accordance with an embodiment, an image forming apparatus comprises an acquisition section configured to acquire an image of a document; an image processing section configured to carry out an image processing on the image acquired by the acquisition section; a forming section configured to form the image to which the image processing is carried out by the image processing section on a medium; a discrimination section configured to discriminate whether or not the image acquired by the acquisition section is a special image on the basis of the image, acquired by the acquisition section, which is different from the image to which the image processing is carried out by the image processing section; and a control section configured to carry out special control to the forming section if the discrimination section discriminates that the acquired image is the special image.

Hereinafter, each embodiment of the present invention is described with reference to the accompanying drawings. The same or corresponding elements are applied with the same reference numerals to be described. These embodiments are also applicable mutatis mutandis to a system comprising the corresponding means. Furthermore, for the sake of simplicity, if not specifically mentioned, an image is set to a gray-scale image of which each image pixel is 256 gradations. In the case of a color image, the image is set to a CMYK image of cyan (C), magenta (M), yellow (Y) and black (K).

### (Embodiment 1)

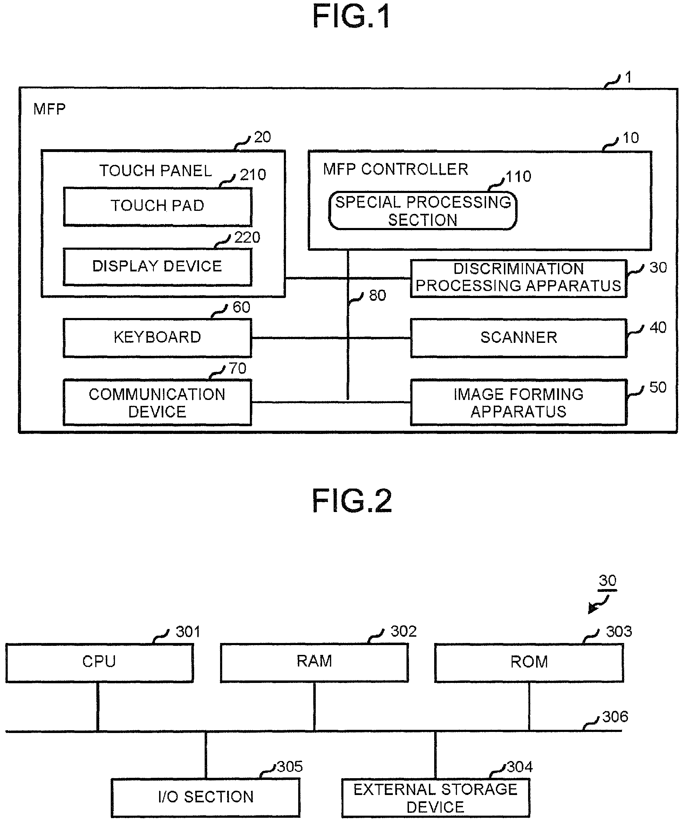

A discrimination processing apparatus 30 serving as an information processing apparatus according to the present embodiment is built in an MFP (Multifunction Peripheral) 1 as shown in Fig. 1. The MFP 1 can scan a document and form a scanned image on a print medium such as a paper.

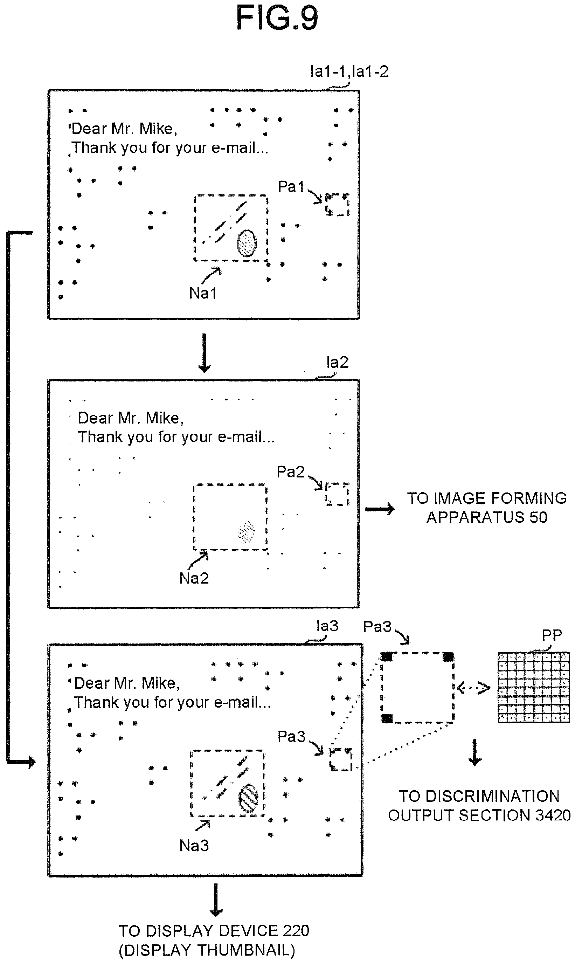

In the present embodiment, a copy prohibition mark (three points arranged with some position relationship) is noted on a document relating to copy prohibition such as a gold certificate or a confidential article. The discrimination processing apparatus 30 detects whether or not information corresponding to the copy prohibition mark is included in the image obtained by scanning the document. Then, the discrimination processing apparatus 30 discriminates whether or not the scanned image is related to the document of which copy is prohibited on the basis of a detection result (refer to Fig. 9).

The MFP 1 physically includes a MFP controller 10, a touch panel 20, a scanner 40, an image forming apparatus 50, a keyboard 60 and a communication device 70 in addition to the discrimination processing apparatus 30. Further, it is possible to carry out information transmission between the sections via an internal bus 80.

The MFP controller 10 includes a processor such as a CPU (Central Processing Unit) and a DSP (Digital Signal Processor). The MFP controller 10 further includes a storage medium such as a RAM (Random Access Memory), a ROM (Read-only Memory) and an external storage device, and an I/O (Input/Output) section.

In the MFP controller 10, for example, the processor executes a program stored in the ROM on the RAM. Then, the processor controls each section of the MFP 1 by transmitting an obtained arithmetic result via the I/O section.

The MFP controller 10 includes a special processing section 110 that executes a special processing on the basis of a discrimination result of the discrimination processing apparatus 30 described later as a functional unit. In the present embodiment, the special processing includes a processing for restricting start of image formation of a copy-prohibited document even if there is an input for instructing copy from a user. Furthermore, details of the special processing are described later.

The touch panel 20 is a user interface device combining a display device 220 and a touch pad 210. The display device 220 physically includes a display panel such as a liquid crystal panel or an organic EL (Electro Luminescence) panel and a controller for displaying an image based on a control signal from the MFP controller on the panel. The touch pad 210 is a pressure-sensitive type or electrostatic type pointing device. The touch pad 210 receives an operation of a user for the image displayed on the display device 220. According to such a constitution, the touch panel 20 displays the image for the user in response to a control signal of the MFP controller 10, and sends the information of the operation of the user for the displayed image to the MFP controller 10.

The scanner 40 reads a document with an image sensor such as a CIS (Contact Image Sensor) method or a CCD (Charge Coupled Devices) method to acquire an image as electronic data. The scanner 40 sends the acquired image to the MFP controller 10. In this way, the scanner 40 functions as a part for acquiring an image for the MFP 1.

The discrimination processing apparatus 30 is an information processing apparatus that carries out an image processing on an image acquired by the scanner 40 and discriminates whether or not the image is a special image. The discrimination processing apparatus 30 sends a discrimination result to the MFP controller 10. Further, the discrimination processing apparatus 30 outputs the image to which the image processing is carried out to the MFP controller 10 as an image (hereinafter, referred to as a formed image) to be formed on a medium for printing. In the present embodiment, the discrimination processing apparatus 30 generates a thumbnail image of the image acquired by the scanner 40 and outputs the thumbnail image to the MFP controller 10. Details of the discrimination processing apparatus 30 are described later. Hereinafter, an image obtained by scanning a document of which copy is prohibited (document on which a copy prohibition mark is noted) is called a prohibition image. In the present embodiment, the special image refers to the prohibition image.

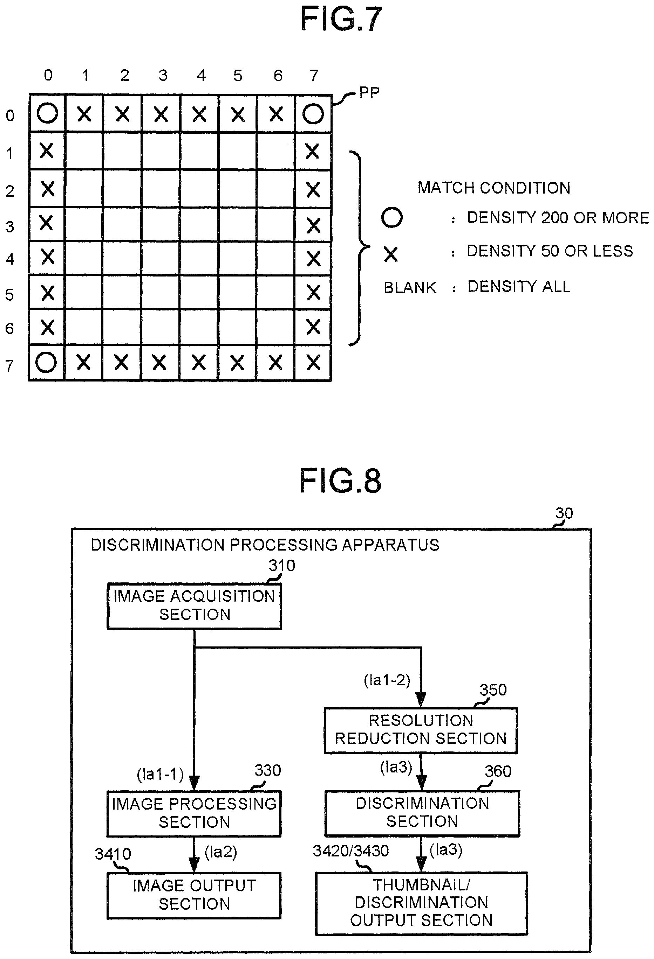

The discrimination processing apparatus 30 of the present embodiment carries out the image processing on the image acquired by the scanner 40. Further, the discrimination processing apparatus 30 discriminates whether or not the image acquired by the scanner 40 is an image (prohibition image) relating to the copy-prohibited document. The discrimination processing apparatus 30 carries out discrimination of whether an image is the prohibition image using the image different from the image to which the image processing is carried out by the discrimination processing apparatus 30 in images acquired from an external device (the MFP controller 10 and the scanner 40) (refer to Fig. 8 and Fig.9). Thus, a degree of reduction of discrimination accuracy is small due to the influence of the image processing.

The image forming apparatus 50 forms an image on a print medium such as a paper or a film by an inkjet system, an electrophotographic system or an impact dot system. The image forming apparatus 50 communicates with the MFP controller 10 via the internal bus 80, and forms the image transmitted from the MFP controller 10. In this way, the MFP 1 forms the image of the document acquired by the scanner 40 on the medium to copy the document.

In the present embodiment, in a case in which the discrimination processing apparatus 30 discriminates that the image is the prohibition image, the special processing section 110 executes control (prohibition control) for prohibiting the formation of the image on the image forming apparatus 50 as the special processing. A concrete example of the prohibition control of the image formation is described. Firstly, in a case in which the user carries out an operation for instructing the execution of the image formation, the special processing section 110 displays "The copy of the document is prohibited" on the display device 220. Then, the special processing section 110 starts interruption control for blocking sending of an image formation command to the image forming apparatus 50 which is sent by the MFP controller 10.

The keyboard 60 includes a plurality of keys for receiving operations of the user and a user interface for sending information of a received operation to the MFP controller 10.

The communication device 70 is an interface including a communication function with an external device such as a LAN (Local Area Network) device and a USB (Universal Serial Bus) port.

Next, the discrimination processing apparatus 30 is described. The discrimination processing apparatus 30 is physically composed of a CPU (central processing unit) 301, a RAM (Random Access Memory) 302, a ROM (Read-only Memory) 303, an external storage device 304, an I/O (Input/Output) section 305 and an inner bus 306.

The CPU 301 is a central processing unit that controls various functions of the discrimination processing apparatus 30, and executes a program loaded from the ROM 303 to the RAM 302 to execute a processing described later.

The RAM 302 is a volatile memory that temporarily stores intermediate data and the program executable by the CPU and is used as a working area when the CPU 301 carries out various processing.

The ROM 303 is a nonvolatile memory that stores the program executed by the CPU 301 and necessary setting and data.

The external storage device 304 is a large capacity storage device such as a hard disk drive, a CD-ROM (Compact Disc Read Only Memory) and a flash memory, and stores large capacity data used for a processing described later.

The I/O section 305 is an input/output device that controls input/output of information with each section of the MFP 1 connected with the discrimination processing apparatus 30, which is constituted by a USB (Universal Serial Bus) and a serial port.

Furthermore, the CPU301, the RAM 302, the ROM 303, the external storage device 304 and the I/O section 305 are connected with each other through the inner bus 306, and it is possible to mutually carry out the sending of information therebetween.

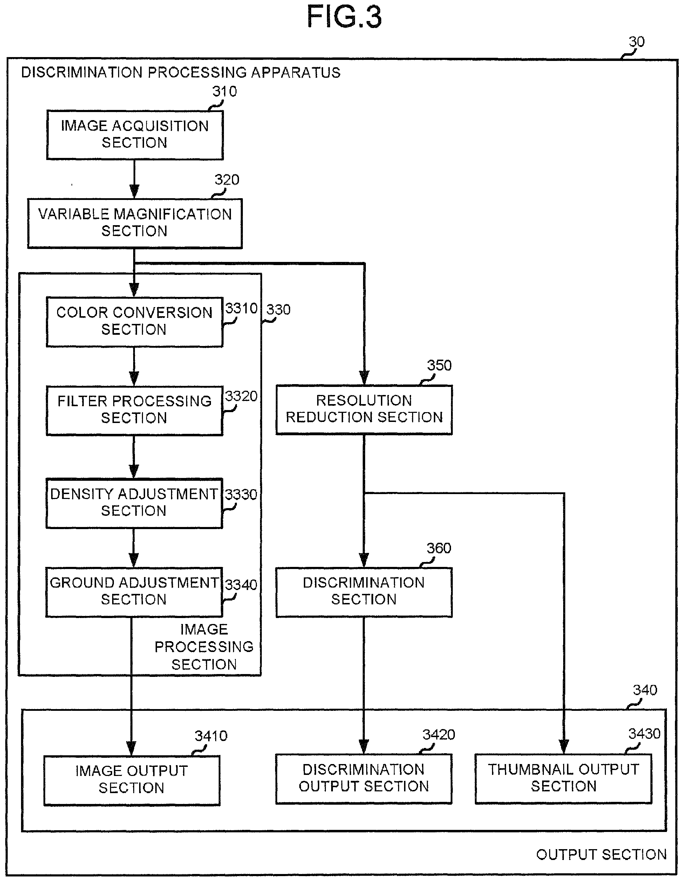

As shown in Fig. 3, the discrimination processing apparatus 30 functions as an image acquisition section 310, a variable magnification section 320, an image processing section 330, an output section 340, a resolution reduction section 350 and a discrimination section 360 according to the foregoing physical constitution. The output section 340 includes an image output section 3410, a discrimination output section 3420 and a thumbnail output section 3430 as functional units.

The image acquisition section 310 acquires an image of a document read by the scanner 40 via the I/O section 305. The image acquisition section 310 transmits the acquired image to the variable magnification section 320.

The variable magnification section 320 converts a magnification of the image transmitted from the image acquisition section 310. The change of the magnification of the image refers to change of the size of the paper of a virtual document at the time the scanner 40 reads the document. For example, a case in which document read resolution of the scanner 40 is 800 dpi, the set document size is A3 size (international standard), and magnification designation of the user is 50% is assumed. Herein, the variable magnification section 320 thins the image pixel to reduce the document size to 1/2 vertically and horizontally to change the image to the image (600 dpi) of AS size.

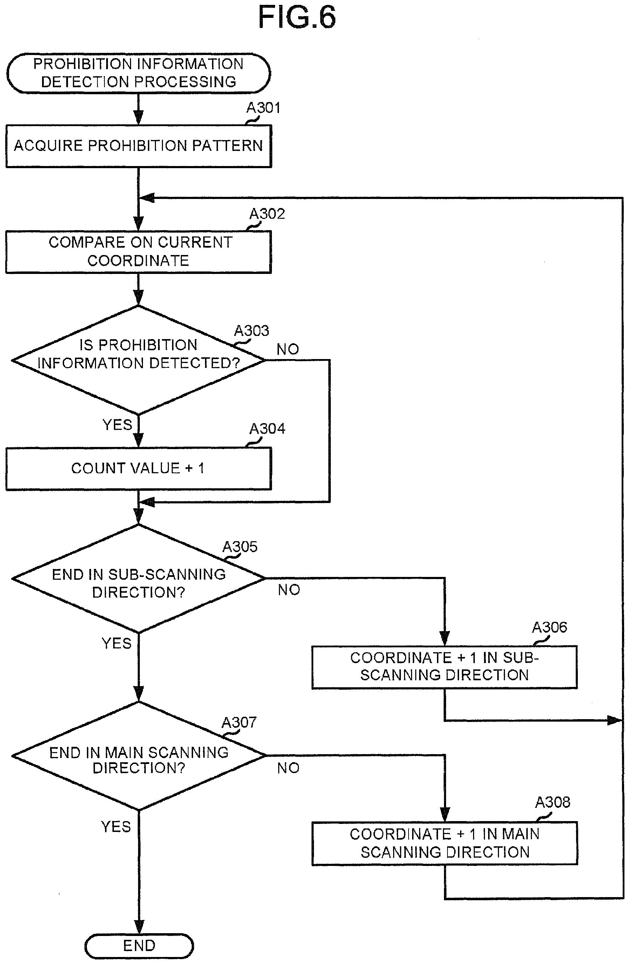

At the time of the change of the magnification, there is a case in which the image pixel is interpolated or thinned. A bilinear method is used for complementing or thinning. However, known methods such as a nearest neighbor method and a bicubic method may be used. The display device 220 displays a display screen, and designation of the user is determined through the operation received by the touch pad 210 and the keyboard 60. Hereinafter, the same shall apply to the designation of the user. In the present embodiment, the designation of setting of a low size and low resolution (for example, less than a business card size, and less than 100 dpi (dpi: dot per inch)) is invalid as a prohibition information detection processing (FIG. 6) described later becomes more difficult.

The variable magnification section 320 transmits the converted image to each of the image processing section 330 and the resolution reduction section 350. In the present embodiment, the image transmitted to the image processing section 330 and the image transmitted to the resolution reduction section 350 by the variable magnification section 320 are respectively stored in different areas of the RAM 302.

Each section at the downstream side of the discrimination processing apparatus 30 can use the image acquired by the image acquisition section 310 with a size and resolution intended by the user through the variable magnification section 320 without restriction on hardware of the scanner 40. The variable magnification section 320 plays a role of compensating the function of the scanner 40 at the time of acquiring the image, and thus may be set to a part of the image acquisition section 310. In other words, the image transmitted to the image processing section 330 and the image transmitted to the resolution reduction section 350 by the variable magnification section 320 can also be called the image acquired by the image acquisition section 310.

The image processing section 330 carries out the image processing on (processes) the image transmitted from the variable magnification section 320 on the basis of the designation of the user. The image processing section 330 outputs the image to which the image processing is carried out to the image output section 3410. The image processing section 330 includes a color conversion section 3310, a filter processing section 3320, a density adjustment section 3330 and a ground adjustment section 3340 as functional units of different types of image processing to be executed.

The color conversion section 3310 converts a color or a color tone of the image transmitted from the variable magnification section 320 through an adjustment of color balance, an adjustment of a tone curve of each color (GRB), level correction of each color and a lens filter. The color conversion section 3310 transmits the image to which a conversion processing is carried out to the filter processing section 3320. The setting of the adjustment is determined depending on hardware characteristics of the scanner and the image forming apparatus 50 stored in a predetermined area of the ROM 303, characteristics of ink and a print medium, and the input of the user. It is possible to adjust the color of the output image according to the hardware characteristics of the scanner 40 and the image forming apparatus 50 and the characteristics of the ink and the print medium through the function of the color conversion section 3310.

The filter processing section 3320 carries out a filter processing of a smoothing filter or a sharpening filter on at least part of the area of the image transmitted from the color conversion section 3310. The smoothing filter is realized by using, for example, a low pass filter, a moving average filter and a weighted average filter. The sharpening filter is realized by using, for example, a differential filter, a 4-neighbor sharpening filter and an 8-neighbor sharpening filter. Which filter processing is executed in corresponding numerical value setting is determined through an instruction operation of the user and setting stored in a predetermined area of the ROM 303. The filter processing section 3320 transmits the image to which the filter processing is carried out to the density adjustment section 3330.

Through the filter processing of the filter processing section 3320, an image conforming to a purpose of use of the user such as an image which is smoothed and of which noise is removed and an image which highlights features of a blurred image can be output.

Furthermore, if the image to which the filter processing is carried out is used for discrimination, there is a case in which accuracy of detection of information corresponding to the copy prohibition mark is decreased. This is because, for example, there is a case in which the shape of the copy prohibition mark is blurred through the smoothing filter, and a case in which the detection is impossible. This is because there is a case in which distinction of surroundings and the copy prohibition mark becomes difficult even through the sharpening filter. In this case, the accuracy of the detection is decreased when compared with a case in which the filter processing is not carried out. Thus, if the discrimination section 360 carries out the discrimination with the image to which the filter processing by the filter processing section 3320 is carried out, the accuracy of the discrimination is decreased.

The density adjustment section 3330 adjusts density (shade) of at least part of the area of the image transmitted from the filter processing section 3320. The density corresponds to a pixel value of each image pixel in the case of a monochrome image. The density corresponds to a pixel value in a case of converting an image of three primary colors of subtractive color mixing to a gray-scale image in the case of a color image. The density adjustment section 3330 converts the density by a method, for example, a tone curve, a histogram, binarization by a threshold value, an arithmetic operation and a matrix transformation. Which conversion method is applied to corresponding numerical value setting is determined through an instruction operation of the user and setting stored in a predetermined area of the ROM 303. The density adjustment section 3330 transmits the image of which the density is converted to the ground adjustment section 3340.

It is possible to convert an image such as a too thin image and a too thick image according to a purpose of use of the user through the density adjustment section 3330. Furthermore, in the case of the color image or the monochrome image, the color density of any one of primary colors such as C, Y, M and K may be the object of the density conversion.

Furthermore, if the image to which a density adjustment processing is carried out is used for the discrimination, there is a case in which the accuracy of the detection of the information corresponding to the copy prohibition mark is decreased. This is because, for example, there is a case in which a contrast ratio between the copy prohibition mark and the surroundings is decreased due to density change by the tone curve or entire density decrease. Thus, if the discrimination section 360 carries out the discrimination with the image to which the density adjustment processing by the density adjustment section 3330 is carried out, there is a case in which the accuracy of the discrimination is decreased when compared with in a case in which an image to which the density adjustment processing is not carried out is used.

The ground adjustment section 3340 adjusts density of an image pixel of a ground part on which necessary information for the user such as characters, photos and designs is described for at least part of the area of the image transmitted from the density adjustment section 3330.

For example, in a case in which the paper of the document scanned by the scanner 40 is colored, if the paper of the document is copied without any changes, it is possible that the necessary information for the user such as characters, photos and designs is inconspicuous due to the color of the paper. Further, in a case in which the paper of the document is copied, the ink is wasted unnecessarily. Thus, the ground adjustment section 3340 adjusts the density (in general, reduces the density) of unnecessary parts for the user such as a color and a pattern of the document.

The ground adjustment section 3340 firstly separates an area occupied by the ground from an area (area other than the ground) in which the necessary information for the user such as characters, photos and designs is described in the image. In a case in which the paper of the document scanned by the scanner 40 is colored, as the color of the paper becomes the color of the ground, an area in a color identical to or similar with the color of the ground in the transmitted image is a ground part. Thus, the ground adjustment section 3340 discriminates that a part of which the color is different from the color of the ground is an area other than the ground. Then, the density of the image pixel of the ground part is changed on the basis of an instruction operation of the user. A concrete method for changing the density is the same as that used by the density adjustment section 3330. In this way, the ground adjustment section 3340 transmits the image of which the ground is adjusted to the image output section 3410.

Furthermore, in a case in which a background pattern (for example, a dot pattern, a net pattern and a line pattern) other than the information such as characters, photos and designs is described in advance on the paper with a predetermined color and density, the color and the density of the background pattern is the color and the density of the ground. In this case, an area identical to or similar with the color and the density of the background pattern in the image is a ground part. Further, even if the paper is white, there is also a case in which a color generated by optical characteristics or reading setting of the scanner 40 and a placement way of the document becomes the color of the ground.

In the present embodiment, the ground adjustment section 3340 carries out pre-scan in conjunction with the scanner 40 to acquire an image obtained by only scanning the paper of the document. By comparing this image and the image obtained by scanning the document, the area of the ground is separated from the part (information area) in which the necessary information for the user is described.

Besides this, the ground adjustment section 3340 may determine that the part designated by the user with a touch operation is the ground area. Further, a method for determining that the part of the image pixel identical to or similar with the color and the density designated by the user is the ground area may also be adopted. Alternatively, the ground adjustment section 3340 acquires a histogram of image pixel values of the image acquired by the image acquisition section 310 to determine the image pixel value of the most frequent value of the histogram to be the color of the ground.

The ground adjustment section 3340 can adjust the image of which a level of satisfaction is decreased due to the ground, for example, the color of the ground is too thick to bury the necessary characters, photos and designs for the user, in accordance with a purpose of use of the user.

If the image to which a ground adjustment processing is carried out by the ground adjustment section 3340 is used for the discrimination, there is a case in which the accuracy of the detection of the information corresponding to the copy prohibition mark is decreased. For example, the part in which the copy prohibition mark is described is determined to be the ground in the ground adjustment processing, and if the density of the ground is greatly decreased, recognition of the ground becomes difficult. Thus, if the discrimination section 360 carries out the discrimination with the image to which the ground adjustment processing by the ground adjustment section 3340 is carried out, there is a case in which the accuracy of the discrimination is decreased.

As stated above, the image processing section 330 including the color conversion section 3310, the filter processing section 3320, the density adjustment section 3330 and the ground adjustment section 3340 carries out the image processing on the image transmitted from the variable magnification section 320 (from the image acquisition section 310 in a case in which the variable magnification section 320 is regarded as part of the image acquisition section 310), and transmits the image to the image output section 3410 of the output section 340. It is possible to correct the image acquired by the image acquisition section 310 in accordance with a purpose of use through the image processing section 330.

The output section 340 outputs a processing result of the discrimination processing apparatus 30 to each section of the MFP 1 other than the discrimination processing apparatus 30. The image output section 3410 transmits the image to which the image processing is carried out by the image processing section 330 to the MFP controller 10 in order to form the image with the image forming apparatus 50. The discrimination output section 3420 transmits a discrimination result described later of the discrimination section 360 to the MFP controller 10. The thumbnail output section 3430 outputs a thumbnail image generated by the resolution reduction section 350 to the MFP controller 10 in order to display the thumbnail image on the display device 220.

The resolution reduction section 350 reduces (decreases) the resolution of the image of which the magnification is changed by the variable magnification section 320. In the present embodiment, the resolution is reduced by a simple thinning method. The resolution of the image can be reduced at high speed by adopting such a method. A thinning ratio is determined through the setting stored in a predetermined area of the ROM 303 or the designation operation of the user, but herein, is reduced to 50 dpi as predetermined resolution. As other examples, the thinning ratio is reduced to 100 dpi, or the resolution is reduced to 1/6 in both x axis direction and y axis direction of the image. Furthermore, the resolution reduction section 350 may reduce the resolution of the transmitted image by a complementing and thinning method. The resolution reduction section 350 transmits the image of which the resolution is reduced to the discrimination section 360 and the thumbnail output section 3430.

The discrimination section 360 discriminates whether or not the image acquired by the image acquisition section 310 is the prohibition image by using the image transmitted from the resolution reduction section 350 as an image for discrimination. In the present embodiment, the discrimination section 360 discriminates whether or not it is detected that the area corresponding to the prohibition mark for copy in the image for discrimination is equal to or greater than a predetermined threshold value, and discriminates that the acquired image is the prohibition image in a case in which it is detected that the area is equal to or greater than the threshold value. On the other hand, the discrimination section 360 discriminates that the acquired image is not the prohibition image in a case in which the number of detection of corresponding areas is smaller than the predetermined threshold value. Then, the discrimination section 360 transmits the discrimination result to the discrimination output section 3420. In the discrimination processing apparatus 30 of the present embodiment, the discrimination section 360 is used to discriminate whether or not the image of which the resolution is reduced by the resolution reduction section 350 is the prohibition image (refer to Fig. 8 and Fig. 9). This image is stored in a different area of the RAM 302 from the image to which the image processing is carried out by the image processing section 330.

In other words, the discrimination is carried out on the basis of the image which is acquired by the image acquisition section 310 but different from the image to which the image processing is carried out by the image processing section 330. Thus, there is no decrease in the accuracy of discrimination due to the influence of the image processing by the image processing section 330.

Furthermore, since the discrimination is carried out with the image of which the resolution is reduced, a necessary calculation amount for the discrimination may be less when compared with a case of using the image of which the resolution is not reduced. Further, since the image of which the resolution is reduced by the resolution reduction section 350 is used for the discrimination and also used as the thumbnail, necessary memory amount and calculation amount for both the thumbnail display and the discrimination processing are less.

Next, the processing executed by the MFP 1 and the discrimination processing apparatus 30 is executed with reference to flowcharts.

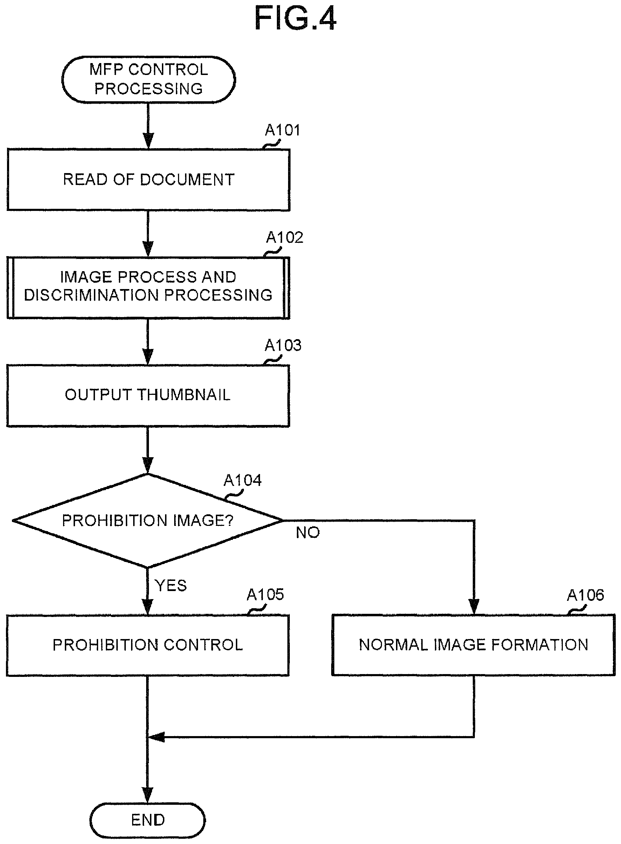

In the MFP 1 in a start state, if the user sets the document on the scanner 40 and then presses a read button, the MFP controller 10 starts a MFP control processing shown in Fig. 4.

In the MFP control processing, firstly, the MFP controller 10 executes the read of the document by transmitting a control signal to the scanner 40 (Act A101). In other words, the scanner 40 optically reads the document on which the copy prohibition mark is described to acquire an image of the document.

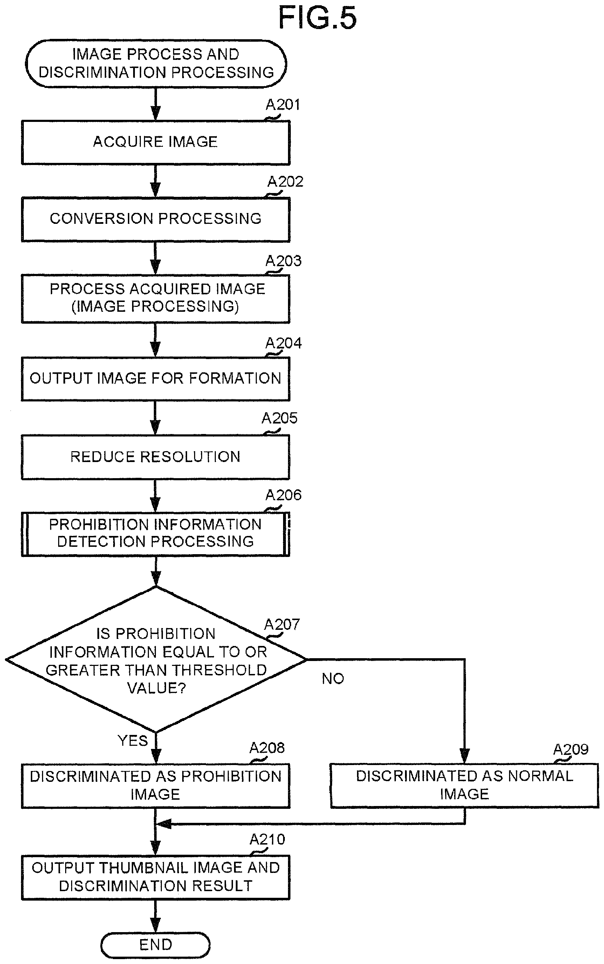

Next, the discrimination processing apparatus 30 starts the image process and the discrimination processing shown in Fig. 5 (Act A102).

In the image process and the discrimination processing, firstly, the image acquisition section 310 acquires the image of the document acquired by the scanner 40 (Act A201). Specifically, the image acquisition section 310 acquires image data of the document read by the scanner 40 via the internal bus 80 and the I/O section 305.

Next, the variable magnification section 320 converts the magnification of the image acquired by the image acquisition section 310 (Act A202). Specifically, the variable magnification section 320 firstly receives the operation of the user through the keyboard 60 and the touch pad 210 to determine a magnification. Then, the size of the image is converted with the received magnification by the bilinear method. Then, the variable magnification section 320 transmits the image , acquired by the image acquisition section 310, of which the magnification is converted to the resolution reduction section 350 and the image processing section 330. The variable magnification section 320 generates images to be transmitted to the resolution reduction section 350 and the image processing section 330 as different data files and respectively stores the images in different areas of the RAM 302. Hereinafter, the same shall apply in a case in which the images with the same content are transmitted to a plurality of parts.

Next, the image processing section 330 processes (carries out the image processing on) the image, acquired by the image acquisition section 310, of which the magnification is converted (Act A203). Specifically, the image processing section 330 firstly reads setting information for the image processing stored in a predetermined area of the ROM 303. Furthermore, the operation of the user is received and operation information of the user is acquired through the keyboard 60 and the touch pad 210.

Next, each section of the image processing section 330 such as the color conversion section 3310, the filter processing section 3320, the density adjustment section 3330 and the ground adjustment section 3340 executes the image processing on the basis of the setting information and the operation information. In other words, the color conversion section 3310 converts the color or the color tone of the image through an adjustment of color balance, an adjustment of a tone curve of each color (RGB), a level correction of each color and a lens filter. The filter processing section 3320 carries out the filter processing of the smoothing filter or the sharpening filter. The density adjustment section 3330 executes the density adjustment by a method, for example, a tone curve, a histogram, binarization by a threshold value, an arithmetic operation and a matrix transformation. After that, the ground adjustment section 3340 carries out pre-scan in conjunction with the scanner 40 to adjust the density of the ground. Which method and numerical value are used by each section of the image processing section 330 to carry out the image processing is determined according to the setting information and the operation information.

If the processing in Act A203 is finished, the image processing section 330 outputs the processed image as an image for formation (Act A204). In other words, the image processing section 330 outputs the image to which the image processing is carried out (processed image) to the MFP controller 10 via the image output section 3410. If it is discriminated in a processing described later that the output image is not the prohibition image, the output image is formed on the print medium by the image forming apparatus 50. In other words, the image processing section 330 carries out the image processing on the image, acquired by the image acquisition section 310, of which the magnification is converted by the variable magnification section 320, and outputs the image as an image (image Ia2 in Fig. 9) for image formation.

If the processing in Act A204 is finished, the resolution reduction section 350 reduces the resolution of the image transmitted from the variable magnification section 320 (Act A205). Specifically, the resolution reduction section 350 reduces the resolution of the image stored in the predetermined area of the RAM 302, which is acquired by the image processing section 330 and of which the magnification is changed by the variable magnification section 320, to 50 dpi by the simple thinning method. In this way, the resolution reduction section 350 generates an image for discrimination (image Ia3 in Fig. 9).

If the processing in Act A205 is finished, the discrimination section 360 starts the prohibition information detection processing shown in Fig. 6 (Act A206).

In the prohibition information detection processing, firstly, the discrimination section 360 acquires a prohibition pattern PP serving as a pattern used to discriminate whether or not the image is the prohibition image (Act A301). Specifically, the discrimination section 360 calls a predetermined area of the ROM 303 at the time of factory shipment to acquire the prohibition pattern PP.

The prohibition pattern PP of the present embodiment is a pattern used to detect an area in which the information (prohibition information) corresponding to the copy prohibition mark on the image is included as shown in Fig. 7. A lattice in Fig. 7 corresponds to 1 image pixel. In other words, the prohibition pattern PP is a pattern corresponding to 8 image pixels in the lateral direction and 8 image pixels in the longitudinal direction. A part indicated by a circle is equivalent to a black part of the copy prohibition mark described on the document. Further, a part indicated by a cross is equivalent to a blank part of the copy prohibition mark. The discrimination section 360 applies the prohibition pattern PP to an area serving as a processing object on the image to discriminate that the prohibition information is detected in the object area in a case in which all the densities of the image pixels indicated by circles are 200 or more and all the densities of the image pixels indicated by crosses are 50 or less. No matter what numerical value the density of the image pixel indicated by blank is, the density has no influence on the discrimination result indicating whether or not the prohibition information is detected.

Furthermore, the numerical value and the dimension of the prohibition pattern PP are not limited to those shown in Fig. 7. For example, in a case in which the dimension of the point of the copy prohibition mark is smaller than that in the present embodiment, the dimension of the prohibition pattern PP is changed to 10 pixels in the longitudinal direction and 10 pixels in the lateral direction. In this case, similar with Fig. 7, circles are arranged at the upper left, the lower left and the upper right, and crosses are arranged at other frame parts. Further, as an example in which the match condition of the image pixel value is different from that in Fig. 7, in a case in which the density of the part indicated by the circle is 128 or more and the density of the part indicated by the cross is smaller than 128, a prohibition pattern for discriminating each matching may be adopted.

If the processing in Act A301 is finished, next, the discrimination section 360 compares information extracted from a partial area of a coordinate (current coordinate) serving as a processing object of the image for discrimination with the prohibition pattern PP in order to detect the prohibition information (Act A302). Specifically, the discrimination section 360 extracts the image pixel value (image pixel value corresponding to 8 image pixels in the lateral direction and 8 image pixels in the longitudinal direction) corresponding to the prohibition pattern from the partial area serving as the processing object indicated by the current coordinate value on the image for discrimination. Then, the discrimination section 360 discriminates whether or not the extracted image pixel value is consistent with the match condition of the prohibition pattern PP.

When carrying out the processing in Act A302 for the first time in the prohibition information detection processing which is being executed, the discrimination section 360 sets the upper left (x=0, y=0) of the image as the coordinate serving as the current processing object. After the second time, a coordinate obtained by adding the value of x coordinate and the value of y coordinate in a processing in Act A306 and a processing in Act A308 described later is used.

If the processing in Act A302 is finished, next, the discrimination section 360 discriminates whether or not the prohibition information is detected on the basis of a result of the comparison in Act A302 (Act A303). Specifically, if the image pixel value extracted in the processing in Act A302 executed just before is consistent with the match condition of the prohibition pattern PP, the discrimination section 360 discriminates that the prohibition information is detected. On the other hand, if the extracted image pixel value is not consistent with the match condition, the discrimination section 360 discriminates that the prohibition information is not detected.

If it is discriminated that the prohibition information is detected (Yes in Act A303), the discrimination section 360 adds a count value indicating the number of the detected prohibition information by 1 (Act A304). On the other hand, if it is discriminated that the prohibition information is not detected (No in Act A303), the discrimination section 360 skips the processing in Act A304.

If the processing in Act A304 is finished or it is discriminated that the No is taken in Act A303, next, the discrimination section 360 discriminates whether or not scanning in a sub-scanning direction is ended (Act A305). In the current main scanning axis (y axis), if the detection processing of the prohibition information shown in Act A302 to Act A304 on all the image pixels in the sub-scanning direction (x axis direction) is ended and, the discrimination section 360 discriminates that the scanning in the sub-scanning direction is ended.

If it is discriminated that the scanning in the sub-scanning direction is not ended (No in Act A305), the discrimination section 360 adds the coordinate in the sub-scanning direction serving as the processing object in the processing in Act A302 by 1 (Act A306). Then, the discrimination section 360 returns to the processing in Act A302 to continue the scanning.

On the other hand, if it is discriminated that the scanning in the sub-scanning direction is ended (Yes in Act A305), next, the discrimination section 360 discriminates whether or not scanning in the main scanning direction is ended (Act A307). If the detection processing of the prohibition information shown in Act A302 to Act A304 on all the image pixels in the main scanning axis (y axis) is ended, the discrimination section 360 discriminates that the scanning in the main scanning direction is ended.

If it is discriminated that the scanning in the main scanning direction is not ended (No in Act A307), the discrimination section 360 adds the coordinate in the main scanning direction serving as the processing object in the processing in Act A302 by 1 (Act A308). Then, the discrimination section 360 returns to the processing in Act A302 to continue the scanning. On the other hand, if it is discriminated that the scanning in the main scanning direction is ended (Yes in Act A307), the prohibition information detection processing shown in Fig. 6 is ended. Through the processing shown in Act A305 to Act A308, it is possible to scan the whole image for discrimination by using the prohibition pattern PP.

Returning to Fig. 5, if the prohibition information detection processing in Act A206 is ended, the discrimination section 360 discriminates whether or not the number of the detected prohibition information is equal to or greater than the threshold value (Act A207). Specifically, the discrimination section 360 reads out the count value (addition in Act A304 in Fig. 6) stored in a predetermined area of the RAM 302 to acquire the detection result of the execution of the image process and the discrimination processing which are being executed (Act A206). Then, the discrimination section 360 acquires the threshold value stored in a predetermined area of the ROM 303. Then, in a case in which the count value is equal to or greater than the threshold value by comparing the count value with the threshold value, the discrimination section 360 discriminates that the number of the detected prohibition information is equal to or greater than the threshold value.

If the number of the discrimination prohibition information is equal to or greater than the threshold value (Yes in Act A207), the discrimination section 360 discriminates that the image acquired by the image acquisition section 310 is the prohibition image (Act A208). In other words, a discrimination flag set in a predetermined area of the RAM 302 is set. On the other hand, if the number of the discrimination prohibition information is smaller than the threshold value (No in Act A207), the discrimination section 360 discriminates that the image acquired by the image acquisition section 310 is not the prohibition image (normal image) (Act A209). Specifically, the foregoing discrimination flag is cleared.

If the processing in Act A208 or Act A209 is finished, next, the output section 340 outputs the thumbnail image and the discrimination result (Act A210). Specifically, the discrimination output section 3420 outputs a discrimination command corresponding to the discrimination result in the processing in Act A207 to the MFP controller 10. For example, in a case in which the discrimination flag is set in the processing in Act A208 of the image process and the discrimination processing which are being executed, the discrimination output section 3420 outputs a discrimination command (prohibition discrimination command) indicating that the image output in the processing in Act A203 is the prohibition image. On the other hand, in a case in which the discrimination flag is cleared in the processing in Act A209, the discrimination output section 3420 outputs a discrimination command (normal discrimination command) indicating that the image output in the processing in Act A203 is the normal image but not the prohibition image.

In the processing in Act A210, furthermore, the thumbnail output section 3430 outputs the image of which the resolution is reduced by the resolution reduction section 350 in the processing in Act A205 to the MFP controller 10 as the thumbnail image (Act A210). The output image, for example, is used for a case such as display on the display device 220 and confirmation of an image file before the image formation by the image forming apparatus 50.

If the processing in Act A210 is finished, the image process and the discrimination processing in Fig. 5 are ended.

Returning to Fig. 4, if the image process and the discrimination processing in Act A102 are ended, the MFP controller 10 outputs the thumbnail image to the display device 220 (Act A103). Specifically, the MFP controller 10 transmits a control signal for displaying the thumbnail image transmitted from the thumbnail output section 3430 on the display device 220 in the processing in Act A207 in Fig. 5 via the internal bus 80.

If the processing in Act A103 is finished, the MFP controller 10 discriminates whether or not the image of the document read by the scanner 40 is the prohibition image on the basis of the discrimination result transmitted from the discrimination output section 3420 (Act A104). Specifically, in the image process and the discrimination processing (Act A102) relating to the MFP control processing which is being executed, in a case in which it is discriminated that the image is the prohibition image (in other words, in a case in which the processing in Act A206 in Fig. 5 is executed), the prohibition discrimination command is transmitted in the processing in Act A210 in Fig. 5. In this case, the MFP controller 10 discriminates that the image is the prohibition image. On the other hand, in a case in which it is discriminated that the image is not the prohibition image and the normal discrimination command is transmitted in the processing in Act A210 in Fig. 5, it is discriminated that the image is not the prohibition image.

If it is discriminated that the image is the prohibition image in the processing in Act A104 (Yes in Act A104), the special processing section 110 of the MFP controller 10 executes a special control (Act A105). In the present embodiment, as the special control, the special processing section 110 prohibits the output of the image for formation transmitted from the image output section 3410 in the image process and the discrimination processing (Act A102) relating to the MFP control processing which is being executed.

An example of the prohibition control is described. At the time of copying the normal image, in a case of receiving the operation of the user for instructing the copy of the image transmitted from the image output section 3410, a start processing of copy control executed by the MFP controller 10 is carried out. Then, a control signal for instructing the copy of the image is transmitted to the image forming apparatus 50. In the processing in Act A105, the special processing section 110 starts an interruption processing relating to the prohibition processing to block the start of the copy control executed by the MFP controller 10 in a case of receiving the operation of the user for instructing the copy of the image transmitted from the image output section 3410. As a result, even if the user carries out the operation for instructing the copy, since the copy control is not started, the image relating to the prohibited document is not used for the image forming processing.

As other examples of the prohibition processing, before the copy is started, the special processing section 110 deletes the image, stored in the RAM of the MFP controller 10, which is transmitted from the image output section 3410. Alternatively, the transmitted image is replaced with a template image on which a symbol indicating "copy prohibition" is noted. Even if such a method is adopted, the image of the read document is not used for the image forming processing. If such a method is adopted, the prohibition processing can be executed with a small calculation amount.

In the present embodiment, in the processing in Act A105, the special processing section 110 further transmits a control signal for displaying "The document is a copy-prohibited document" on the display device 220. Through such a configuration, a message indicating that the document is a prohibited document is displayed on the screen of the display device 220, the formation of the image is suppressed according to a warning for the user. Furthermore, the reason why the copy is not started can be notified to the user in spite of the execution of the operation for instructing the start of the copy. Thus, doubtfulness of the user caused by non-execution of the operation executed by himself/herself can be decreased.

Returning to Act A104, if it is discriminated that the image is not the prohibition image (No in Act A104), the MFP controller 10 executes normal image formation (Act A106). Specifically, in the processing Act A106, the image forming apparatus 50 forms the image transmitted from the image output section 3410 in the image process and the discrimination processing (Act A209 in Fig. 5). Thus, the MFP controller 10 transmits the transmitted image, the command for instructing the formation of this image and an image forming command including setting determined by the instruction operation of the user to the image forming apparatus 50 via the internal bus 80.

If the processing in Act A105 or Act A106 is ended, the MFP control processing in Fig. 4 is ended.

Effects of the discrimination processing apparatus 30 according to the present embodiment are described. Firstly, the flow of the image handled by the discrimination processing apparatus 30 is described with reference to Fig. 8. Furthermore, in Fig. 8, in order to describe the flow of the image, components other than necessary components are omitted. Hereinafter, the same applies to corresponding figures.

The discrimination processing apparatus 30 transmits the image acquired by the image acquisition section 310 to the image processing section 330 (image Ia1-1), and meanwhile also to the resolution reduction section 350 (image Ia1-2). The image processing section 330 carries out the image processing on the image Ia1-1, and processes the image Ia1-1 into an image Ia2 to be formed on the print medium. Then, the image output section 3410 outputs the image Ia2.

On the other hand, the image Ia1-2 of which the resolution is reduced by the resolution reduction section 350 and the image to which the image processing is carried out by the image processing section 330 are the same in the content, but are different as entities on the RAM 302. The image processing is not carried out yet on the image Ia1-2 by the image processing section 330.

The resolution reduction section 350 reduces the resolution of the image Ial-2 to generate an image Ia3 for discrimination. The discrimination section 360 uses the image Ia3 to execute the discrimination processing in Fig. 6 (Act A206 to Act A209 in Fig. 5). Then, the discrimination output section 3420 outputs the discrimination result. Further, the thumbnail output section 3430 outputs the image Ia3 as the thumbnail image.

An example of the images shown in Fig. 8 is shown in Fig. 9. In Fig. 9, alphabet characters as information necessary for the user, three-point dots (areas Pa1, Pa2 and Pa3 and others) as copy prohibition marks and dirt and faintness (areas Na1, Na2 and Na3) as unnecessary information are respectively shown.

The image Ia1-1 and the image Ia1-2 are the image acquired by the image acquisition section 310 without any changes. The resolution is not reduced. Further, the information (refer to the area Na1) of the dirt of the document and noise generated at the time of the scanning of the scanner 40 is included in the image without any changes.

In the image Ia2, the image processing is carried out by the image processing section 330, and the dirt of the area Na1 is reduced. However, the information corresponding to the copy prohibition mark is also difficult to be recognized compared with the image Ia1-1 and the image Ia1-2 (for example, refer to the area Pa2).

The image Ia3 is obtained in such a manner that the resolution reduction section 350 reduces the resolution of the image Ia1-2. In the image Ia3, although the resolution is reduced, as it is different from the image (image Ia2) to which the image processing is carried out by the image processing section 330, there is no difficulty in recognizing the information corresponding to the copy prohibition mark due to the influence of the image processing by the image processing section 330 (refer to the area Pa3). Thus, the comparison with the prohibition pattern PP can be carried out with high accuracy.

Further, the image Ia3 is also used as the thumbnail image. Since the image Ia3 is not subjected to the image processing corresponding to the image Ia3 for formation, but is an image having low resolution used as the thumbnail, convenience of the user is larger than that in a case of limiting the image processing on the image for formation.

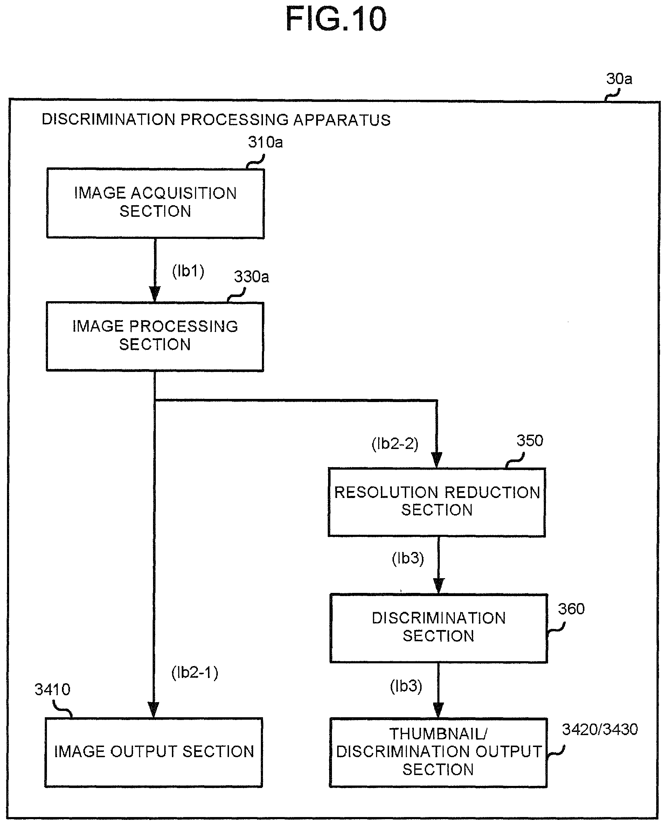

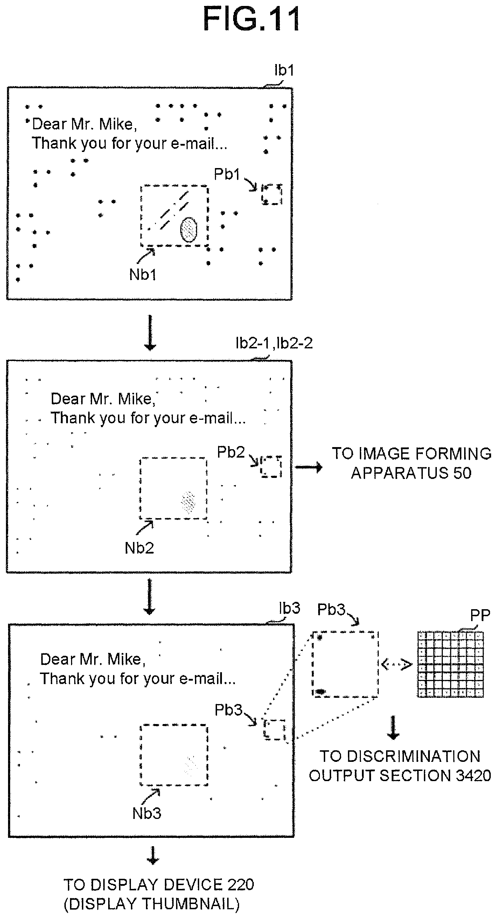

On the other hand, an example of a case of using the image to which the image processing is carried out as the image for discrimination is described with reference to Fig. 10 and Fig. 11. In a discrimination processing apparatus 30a in Fig. 10, the image acquisition section 310a transmits an acquired image Ib1 to an image processing section 330a. The image processing section 330a carries out the image processing on the image Ib1, and outputs the processed image as an image Ib2-1 for formation. Further, the image processing section 330a transmits an image Ib2-2 to which the image processing is carried out to the resolution reduction section 350. The resolution reduction section 350 reduces the resolution of the image Ib2-2 to generate an image Ib3 for discrimination. Then, the discrimination section 360 uses the image Ib3 to carry out the discrimination processing. The discrimination output section 3420 outputs the discrimination result, and meanwhile outputs the image Ib3 as the thumbnail image. All the sections of the discrimination processing apparatus 30a in Fig. 10 are different from the discrimination processing apparatus 30 shown in Fig. 8 only in the transfer destination of the image and are the same as that in the functions.

An example of the images shown in Fig. 10 is shown in Fig. 11. The image Ib1 acquired by the image acquisition section 310a is the same as the image Ia1-1 and Ia1-2 in Fig. 8.

In the image Ib1, the information (refer to an area Nb1) of the dirt of the document and noise generated at the time of the scanning of the scanner 40 is included in the image without any changes.

In the images Ib2-1 and Ib2-2, the image processing is carried out by the image processing section 330a, and the dirt of the area Nb1 is reduced (area Nb2). However, the information corresponding to the copy prohibition mark is also difficult to be recognized compared with the image Ib1 (for example, refer to an area Pb2).

The image Ib3 is obtained in such a manner that the resolution reduction section 350 reduces the resolution of the image Ib2-2. Thus, even in the image Ib3, the influence caused by the execution of the image processing by the image processing section 330a is generated in the information corresponding to the copy prohibition mark (for example, refer to an area Pb3). Thus, when compared with a case shown in Fig. 9, the detection accuracy of the copy prohibition information is decreased.

Through the above, the discrimination processing apparatus 30 according to the embodiment 1 is described. As stated above, the discrimination processing apparatus 30 comprises the image acquisition section 310; the image processing section 330 that carries out the image processing on the image acquired by the image acquisition section 310; the image output section 3410 that outputs the image to which the image processing is carried out by the image processing section 330; the discrimination section that discriminates whether or not the image acquired by the image acquisition section 310 is the prohibition image on the basis of the image, acquired by the image acquisition section 310, which is different from the image to which the image processing is carried out by the image processing section 330; and the discrimination output section 3420 that outputs the discrimination result of the discrimination section.

According to such a constitution, even in a case in which the discrimination processing apparatus 30 according to the present embodiment executes the image processing, a rate of the decrease in the discrimination accuracy of whether the image is the prohibition image is small.

In particular, according to the constitution of the present embodiment, since the discrimination section 360 uses the image different from the image to which the image processing is carried out by the image processing section 330 as the image for discrimination, there is no decrease in the accuracy of the discrimination due to the influence of the image processing by the image processing section 330. Thus, at the time of guaranteeing the discrimination accuracy of whether the image is the prohibition image, it is not necessary to restrict the image processing.

Further, in the present embodiment, the copy prohibition mark is described on the document serving as the processing object. In response to this, the discrimination section 360 reads out and uses the prohibition pattern PP as the information corresponding to the copy prohibition mark from the ROM 303 serving as a storage device at the time of the discrimination. The discrimination of whether the document is the copy-prohibited document is important due to relating to the security, and thus increase in the discrimination accuracy is particularly effective through the constitution of the present embodiment.

Further, the discrimination processing apparatus 30 of the present embodiment further comprises the resolution reduction section 350 that generates the image obtained by reducing the resolution of the image, acquired by the image acquisition section 310, which is difficult from the image to which the image processing is carried out by the image processing section; the discrimination section 360 discriminates whether or not the image is the prohibition image on the basis of the image generated by the resolution reduction section 350.

According to such a configuration, calculation amount and calculation time necessary for the discrimination may be smaller than those in a case in which the image acquired by the image acquisition section 310 is used for the discrimination without any changes.

Further, the image processing section 330 includes the filter processing section 3320 that carries out the filter processing, the density adjustment section 3330 that carries out the density adjustment, and the ground adjustment section 3340 that carries out the ground adjustment. As stated above, if the image to which the filter processing by the filter processing section 3320 is carried out is used for the discrimination, there is a case in which the discrimination accuracy is decreased. Further, if the image to which the density adjustment by the density adjustment section 3330 is carried out is used for the discrimination, there is a case in which the discrimination accuracy is decreased. Further, if the image to which the ground adjustment by the ground adjustment section 3340 is carried out is used for the discrimination, there is a case in which the discrimination accuracy is decreased. According to the constitution of the discrimination processing apparatus 30 according to the present embodiment, even if at least one of the filter processing section 3320 that carries out the filter processing, the density adjustment section 3330 that carries out the density adjustment and the ground adjustment section 3340 that carries out the ground adjustment is included, the discrimination accuracy of whether the image is the prohibition image can be guaranteed.

Further, the discrimination processing apparatus 30 according to the present embodiment includes the thumbnail output section 3430 for outputting the image generated by the resolution reduction section 350 as the thumbnail image.

Thus, the image used as the thumbnail and the image used for the discrimination by the discrimination section 360 are used in common. Thus, the discrimination processing and generation and use of the thumbnail image can coexist with a less memory usage amount.

Further, the MFP 1 according to the present embodiment includes the scanner 40 that acquires the image of the document; the image processing section 330 that carries out the image processing on the image acquired by the scanner 40; the image forming apparatus 50 that forms the image to which the image processing is carried out by the image processing section 330 on the medium; the discrimination section 360 that discriminates whether or not the image acquired by the scanner 40 is the prohibition image on the basis of the image, acquired by the scanner 40, which is different from the image to which the image processing is carried out by the image processing section 330 (alternatively, a part in which the MFP controller 10 discriminates whether or not the image is the prohibition image in the processing in Act A104 in Fig. 4 on the basis of the discrimination result of the discrimination section 360); and the special processing section 110 that carries out the prohibition control to the image forming apparatus 50 if the discrimination section 360 discriminates that the image is the prohibition image.

According to such a constitution, even in a case in which the MFP 1 according to the present embodiment executes the image processing, the rate of the decrease in the discrimination accuracy of whether the image is the prohibition image is small.

Furthermore, for the same of simplicity, in the present embodiment, a simply constitution only using the prohibition pattern PP in the discrimination of whether the image is the prohibition image is described. As another example, a constitution in which firstly, a plurality of positioning marks having a specific shape is detected and a prohibition pattern away from a positioning mark at a predetermined distance is detected may be adopted.

### (Embodiment 2)

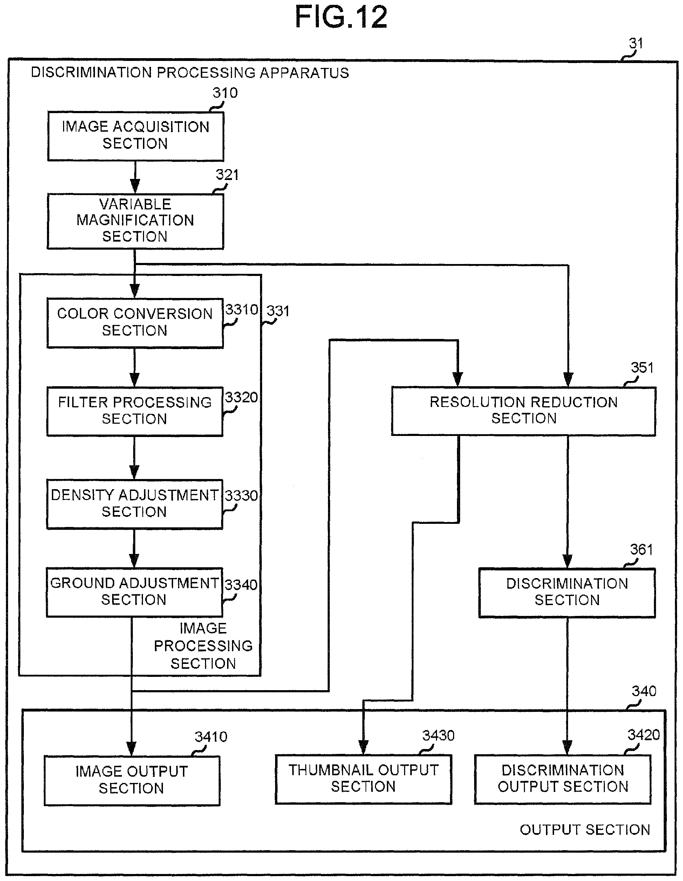

Next, a discrimination processing apparatus 31 according to the embodiment 2 is described with reference with figures. As shown in Fig. 12, the discrimination processing apparatus 31 includes the image acquisition section 310, a variable magnification section 321, an image processing section 331, the output section 340, a resolution reduction section 351 and a discrimination section 361. Similar with the embodiment 1, the output section 340 includes the image output section 3410, the discrimination output section 3420 and the thumbnail output section 3430. Further, the physical constitution of the discrimination processing apparatus 31 is the same as that of the discrimination processing apparatus 30 according to the embodiment 1.

The image acquisition section 310 is identical to the section of the same name according to the embodiment 1.

The variable magnification section 321 converts the magnification of the image transmitted from the image acquisition section 310, similar with the variable magnification section 320 according to the embodiment 1. Then, the image of which the magnification is converted is transmitted to the image processing section 331 and the resolution reduction section 351. At this time, the image transmitted to the image processing section 331 and the image transmitted to the resolution reduction section 351 are stored as different images in different areas on the RAM 302.

The image processing section 331 carries out the image processing on the image transmitted from the variable magnification section 321, similar with the image processing section 330 of the embodiment 1. Then, the image to which the image processing is carried out is transmitted to the resolution reduction section 351 in addition to the image output section 3410.

The function of each section of the output section 340 is the same as that of the section of the same name of the embodiment 1.

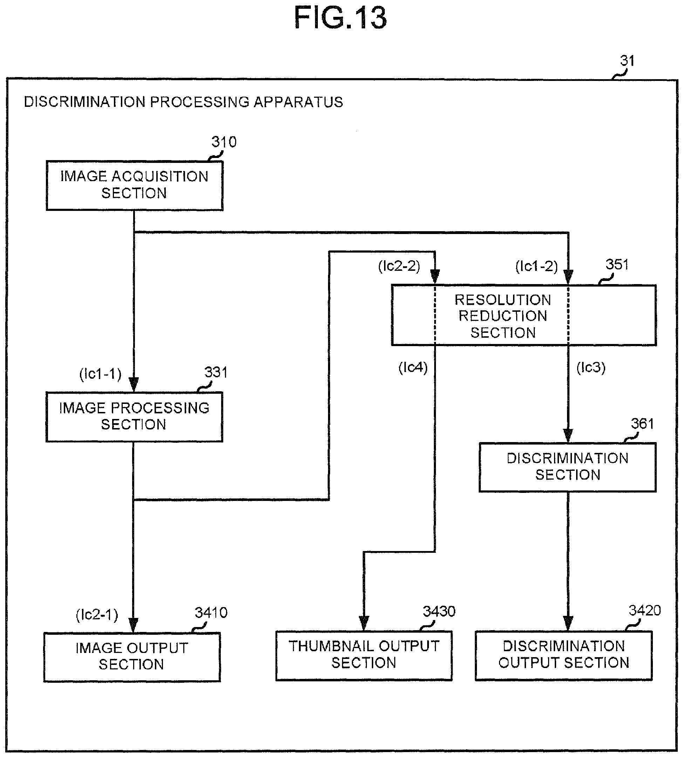

The resolution reduction section 351 reduces the resolution of the image (image Ic1-2 in Fig. 13) transmitted from the variable magnification section 321 to generate an image (image Ic3 in Fig. 13) for discrimination, similar with the resolution reduction section 350 according to the embodiment 1. In addition to this, the resolution reduction section 351 reduces the resolution of the image (image Ic2-2 in Fig. 13) transmitted from the image processing section 331 to generate a thumbnail image (image Ic4 in Fig. 13). The resolution reduction section 351 transmits the generated image Ic3 for discrimination to the discrimination section 361, and meanwhile transmits the thumbnail image Ic4 to the thumbnail output section 3430.

The discrimination section 361 discriminates whether or not the acquired image is the prohibition image with the transmitted image for discrimination, similar with the discrimination section 360 according to the embodiment 1. Then, the discrimination section 361 transmits the discrimination result to the discrimination output section 3420.

The processing executed by the MFP 1 of the present embodiment is the same as the MFP control processing (Fig. 4) executed in the embodiment 1.

The discrimination processing apparatus 31 of the present embodiment executes the same image process and discrimination processing as Fig. 5 except for the following points.
(1) In the processing in Act A203, the image processed by the image processing section 331 is also transmitted to the resolution reduction section 351 in addition to the image output section 3410.
(2) In the processing in Act A205, the resolution reduction section 351 reduces the resolution of the image transferred from the image processing section 331 to generate the thumbnail image.

The flow of the images handled by the discrimination processing apparatus 31 according to the embodiment 2 is described with reference to Fig. 13.

The discrimination processing apparatus 31 transmits the image acquired by the image acquisition section 310 to the image processing section 331 (image Ic1-1), and meanwhile also transmits the image to the resolution reduction section 351 (image Ic1-2). The image processing section 331 carries out the image processing on the image Ic1-1. The image to which the image processing is carried out by the image processing section 331 is transmitted to the image output section 3410 as an image Ic2-1 to be formed on the print medium, and also transmitted to the resolution reduction section 351 as an original image (image Ic2-2) of the thumbnail image.

The resolution reduction section 351 reduces the resolution of the image Ic1-2 to generate the image for discrimination Ic3. The discrimination section 361 uses the image Ic3 to execute the discrimination processing shown in Fig. 6 (Act A206 to Act A209 in Fig. 5). Then, the discrimination output section 3420 outputs the discrimination result.

The resolution reduction section 351 further reduces the resolution of the image Ic2-2 to generate a thumbnail image Ic4. Then, the thumbnail output section 3430 outputs the thumbnail image Ic4.

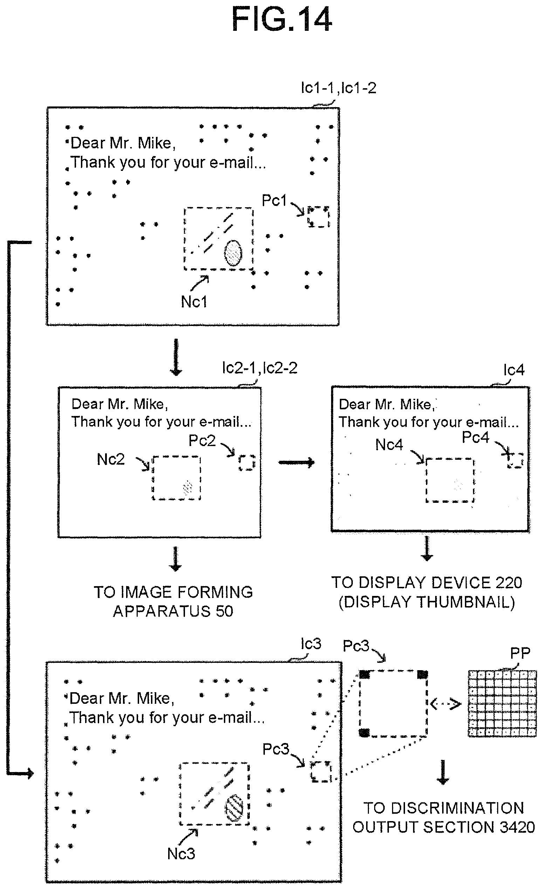

The example of the images shown in Fig. 13 is shown in Fig. 14. In Fig. 14, alphabet characters as information necessary for the user, three-point dots (areas Pc1, Pc2, Pc3, Pc4 and others) as copy prohibition marks and dirt and faintness (areas Nc1, Nc2, Nc3 and Nc4) as unnecessary information are respectively shown.

The images Ic1-1 and Ic1-2 are the images acquired by the image acquisition section 310. The resolution is not reduced. Further, the information (refer to the area Nc1) of the dirt of the document and noise generated at the time of the scanning of the scanner 40 is included in the image without any changes.

In the images Ic2-1 and Ic2-2, the image processing is carried out by the image processing section 331, and the dirt of the area Nc1 is reduced. However, the information corresponding to the copy prohibition mark is also difficult to be recognized compared with the image Ic1 (for example, refer to the area Pc2).

The image Ic3 is obtained in such a manner that the resolution reduction section 351 reduces the resolution of the image Ic1. In the image Ic3, although the resolution is reduced, as it is different from the images (images Ic2-1, Ic2-2 and Ic4) to which the image processing is carried out by the image processing section 331, there is no difficulty in recognizing the information corresponding to the copy prohibition mark due to the influence of the image processing by the image processing section 331 (refer to the area Pc3). Thus, the comparison with the prohibition pattern PP can be carried out with high accuracy.

Further, the image Ic4 is used as the thumbnail image. In the present embodiment, the image Ic4 obtained in such a manner that the resolution reduction section 351 reduces the resolution of the image Ic2-2 to which the image processing is carried out by image processing section 331 as the thumbnail image. Thus, the user can ascertain the effect of the image processing carried out on the image for formation Ic2-1 on the image Ic4 used as the thumbnail.

Furthermore, in the present embodiment, from the point of view of memory reduction, a part for generating the thumbnail image of the image Ic2-2 to which the image processing is carried out by the image processing section 331 is identical to the resolution reduction section 351 serving as the part for generating the image Ic3 for discrimination from the image acquired by the image acquisition section 310. The present invention is not limited to this; the part for generating the thumbnail image and the part for generating the image for discrimination may be different.

As stated above, the discrimination processing apparatus 31 of the present embodiment includes the resolution reduction section 351 that reduces the resolution of the image, acquired by the image acquisition section 310, which is different from the image to which the image processing is carried out by the image processing section 331 to generate an image, and the thumbnail output section 3430 that outputs the image obtained by reducing the resolution of the image to which the image processing is carried out by the image processing section 331 as the thumbnail image.

According to such a constitution, even in a case in which the image processing is executed, the rate of the decrease in the discrimination accuracy of whether the image is the prohibition image is small, and the effect of the image processing carried out on the image for formation can be reflected on the thumbnail image. Thus, the convenience of the user is high.

### (Embodiment 3)

Next, a discrimination processing apparatus 32 according to the embodiment 3 is described with reference to figures. The discrimination processing apparatus 32 of the present embodiment is different from the discrimination processing apparatuses of the embodiments 1 and 2 in that the resolution of the image acquired by the image acquisition section 310 is used as the resolution of the image for discrimination without being reduced.

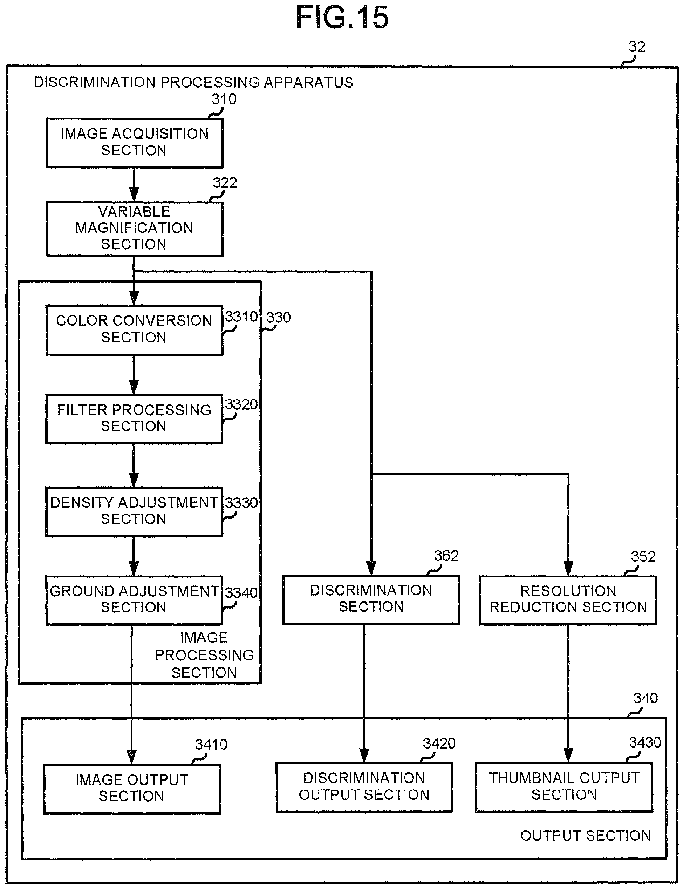

As shown in Fig. 15, the discrimination processing apparatus 32 includes the image acquisition section 310, a variable magnification section 322, the image processing section 330, the output section 340, a resolution reduction section 352 and a discrimination section 362. The output section 340 includes the image output section 3410, the discrimination output section 3420 and the thumbnail output section 3430, similar with the embodiment 1. Further, the physical constitution of the discrimination processing apparatus 32 is the same as that of the discrimination processing apparatus 30 according to the embodiment 1.

The image acquisition section 310 is the same as the section of the same name according to the embodiment 1.

The variable magnification section 322 converts the magnification of the image transmitted from the image acquisition section 310, similar with the variable magnification section 320 according to the embodiment 1. Then, the image of which the magnification is converted is also transmitted to the discrimination section 362 in addition to the image processing section 330 and the resolution reduction section 352. At this time, the images transmitted to the image processing section 330, the resolution reduction section 352 and the discrimination section 362 are stored respectively as different images in different areas on the RAM 302.

The image processing section 330 carries out the image processing on the image transmitted from the variable magnification section 322, similar with the image processing section 330 of the embodiment 1. Then, the image to which the image processing is carried out is transmitted to the image output section 3410.

The function of each section of the output section 340 is identical to the section of the same name of the embodiment 1.

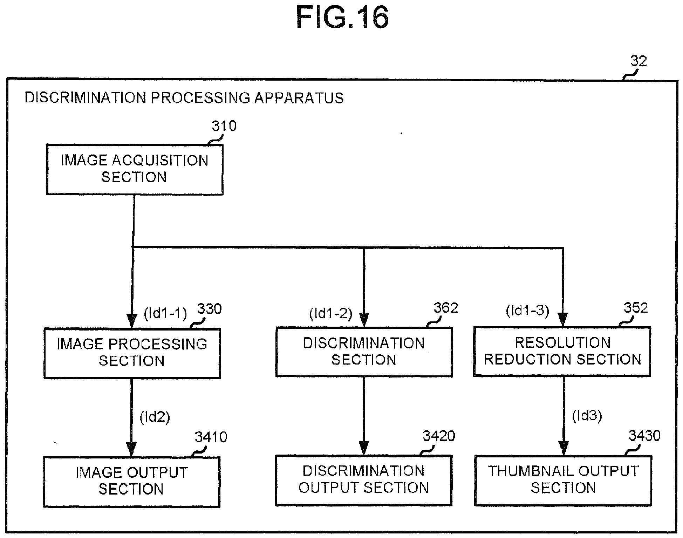

The resolution reduction section 352 generates a thumbnail image (image Id3 in Fig. 16), similar with the resolution reduction section 350 according to the embodiment 1. In the present embodiment, the image acquired by the image acquisition section 310 is used as the image for discrimination without any changes, and since the image of which the resolution is reduced is not used, the resolution reduction section 352 does not transmit the generated image to the discrimination section 362. The resolution reduction section 352 transmits the image Id3 to the thumbnail output section 3430 as the thumbnail image.

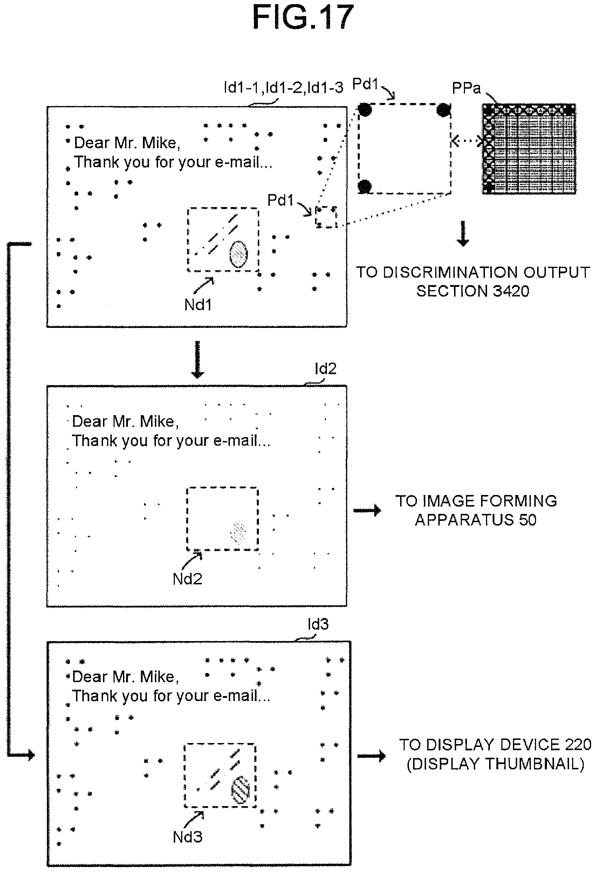

The discrimination section 362 discriminates whether or not the image acquired by the image acquisition section 310 is the prohibition image by using the image transmitted from the variable magnification section 322 as the image for discrimination. In the present embodiment, the discrimination section 362 uses the image, acquired by the image acquisition section 310, of which the magnification is changed by the variable magnification section 322 as the image for discrimination. In other words, the image to which the reduction of the resolution is not carried out yet by the resolution reduction section 352 is used for the discrimination. Thus, resolution of a partial area corresponding to the copy prohibition mark on the image for discrimination is also higher than those in the embodiments 1 and 2. In response to this, the discrimination section 362 detects the prohibition information with a prohibition pattern PPa corresponding to the partial area of which the resolution is higher than those in the embodiments 1 and 2 (refer to Fig. 17).

The processing executed by the MFP 1 of the present embodiment is the same as the MFP control processing (Fig. 4) executed in the embodiment 1.

The discrimination processing apparatus 32 of the present embodiment executes the same image process and discrimination processing as Fig. 5 except for the following points.
(1) In the processing in Act A202, the image of which the magnification is changed by the variable magnification section 322 is also transmitted to the discrimination section 362 in addition to the image processing section 330 and the resolution reduction section 352.
(2) In the processing in Act A205, the resolution reduction section 352 only transmits the image of which the resolution is reduced to the thumbnail output section 3430 but not to the discrimination section 362.

The discrimination processing apparatus 32 of the present embodiment executes the same prohibition information detection processing as Fig. 6 except for the following point.
(1) In the processing in Act A301, the image for discrimination uses the prohibition pattern PPa corresponding to the area of which the resolution is higher than those in the embodiments 1 and 2 is used.

The flow of the images handled by the discrimination processing apparatus 32 according to the embodiment 3 is described with reference to Fig. 16.

The discrimination processing apparatus 32 transmits the image acquired by the image acquisition section 310 to the image processing section 330 as an image Id1-1, and meanwhile transmits the image to the discrimination section 362 as an image for discrimination Id1-2. Furthermore, the discrimination processing apparatus 32 also transmits the image to the resolution reduction section 352 as an original image (image Id1-3) of the thumbnail image. The image processing section 330 carries out the image processing on the image Id1-1. The image to which the image processing is carried out by the image processing section 330 is transmitted to the image output section 3410 as the image Id2 to be formed on the print medium.

The discrimination section 362 uses the image Id1-2 acquired by the image acquisition section 310 to execute the discrimination processing. Then, the discrimination output section 3420 outputs the discrimination result.

The resolution reduction section 352 reduces the resolution of the image Id1-3 to generate the thumbnail image Id3. Then, the thumbnail output section 3430 outputs the thumbnail image Id3.

The example of the images shown in Fig. 16 is shown in Fig. 17. In Fig. 17, alphabet characters as information necessary for the user, three-point dots (area Pd1 and others) as copy prohibition marks and dirt and faintness (areas Nd1, Nd2 and Nd3) as unnecessary information are respectively shown.

The images Id1-1 to Id-3 are the images acquired by the image acquisition section 310 without any changes. The resolution is not reduced. Further, the information (refer to the area Nd1) of the dirt of the document and noise generated at the time of the scanning of the scanner 40 is included in the image without any changes.

In the image Id2, the image processing is carried out by the image processing section 330, and the dirt of the area Nd1 is reduced. However, the information corresponding to the copy prohibition mark is also difficult to be recognized compared with the images Id1-1 to Id1-3.

The image Id3 is obtained in such a manner that the resolution reduction section 352 reduces the resolution of the image Id1-3. The image Id3 is used as the thumbnail image.

In the present embodiment, the discrimination section 362 uses the image Id1-2 as the image for discrimination. In a case in which the number of the areas (for example, the image Pd1) matching the prohibition pattern PPa exceeds a threshold value, the discrimination section 362 discriminates that the image Id1-2 is the prohibition image. In the present embodiment, the discrimination is carried out with the image for discrimination having higher resolution than those in the embodiments 1 and 2, and thus the discrimination accuracy can be increased.

The image Id1-2 is different from the image Id2, and the image processing section 330 does not carry out the image processing on the image Id1-2 yet. Thus, there is no decrease in the accuracy of the discrimination due to the image processing by the image processing section 330.

As stated above, the discrimination processing apparatus 32 of the present embodiment includes the resolution reduction section 352 that reduces the resolution of the image acquired by the image acquisition section 310 to generate an image, and the thumbnail output section 3430 that outputs the image generated by the resolution reduction section 352 as the thumbnail image; the discrimination section 362 discriminates whether or not the image acquired by the image acquisition section 310 is the prohibition image on the basis of the image, acquired by the image acquisition section 310, which is different from the image to which the image processing is carried out by the image processing section 330 and the image generated by the resolution reduction section 352.

According to such a constitution, even if the image processing by the image processing section 330 is carried out, the discrimination processing apparatus 32 can guarantee the discrimination accuracy, and can discriminate whether or not the image is the prohibition image with high discrimination accuracy.

Through the above, the embodiments of the present invention are described. There may be various modifications of the foregoing embodiments as follows.

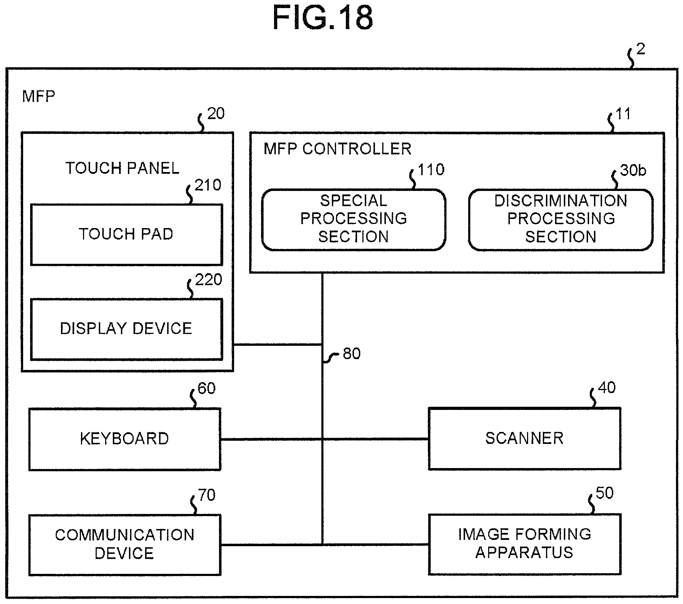

For example, in the embodiments 1 to 3, the discrimination processing apparatuses 30 to 32 are described as different apparatuses from the MFP controller 10. However, the present invention is not limited to this; as shown in Fig. 18, the discrimination processing apparatuses 30 to 32 may be realized as a function (discrimination processing section 30b) of a MFP controller 11 of a MFP 2.

Thus, programs and data for realizing each section of the discrimination processing apparatuses 30 to 32 is pre-recorded in the ROM or the external storage device constituting the MFP controller 11. Then, these programs and data are loaded on the RAM as necessary. Then, the CPU constituting the MFP controller 11 executes the programs shown in Fig. 4 to Fig. 6 to realize the function of each section of the discrimination processing section 30b.

Further, in the foregoing embodiments 1 to 3, a case in which the copy prohibition mark is the three-point dot is described. The present invention is not limited to this; the copy prohibition mark may use another mark. In a case in which the prohibition mark becomes another mark, the prohibition pattern PP stored in the ROM 303 may be changed to a corresponding pattern.

In the foregoing embodiments 1 to 3, the copy prohibition mark is described on the document serving as the processing object. Further, if the discrimination sections 360 to 362 discriminate that the document is different from the normal document, the prohibition processing is carried out. The present invention is also applicable to discrimination of whether the image is other types of special images regardless of the prohibition image. As examples of the special image, a storage and transfer prohibition image indicating that storage and transfer of a read image are prohibited and an image to which a specific image processing is automatically executed are listed.

Thus, a specific mark different from the copy prohibition mark is set corresponding to a special image in place of the prohibition pattern PP. Then, the specific mark is read in place of the prohibition mark in the processing in Act A301 in Fig. 6, and information corresponding to the specific mark is detected using a special pattern on the acquired image. Then, in a case of discriminating that it is detected that the information corresponding to the specific mark on the acquired image is equal to or greater than a threshold value, the special processing section 110 according to the modification executes corresponding special control instead of the prohibition control in the processing in Act A105 in Fig. 4.

For example, in a case in which the storage and the transfer of the image read by the scanner 40 are prohibited, the special processing section 110 starts an invalid interruption program even if receiving the operation of the storage and the transfer. In the case of the image to which the specific image processing is executed automatically, the special processing section 110 may execute the image processing with the image processing section 330.

Further, in the foregoing embodiments 1 to 3, the discrimination processing apparatuses 30 to 32 include the variable magnification sections 320 to 322; however, the variable magnification section may not be included therein.

Further, in the foregoing embodiments 1 to 3, in a case in which the number of the areas matching the special pattern (prohibition pattern PP) is equal to or greater than the threshold value, it is discriminated that the image is the special image. However, the present invention is not limited to this; the discrimination section may discriminate that the image is the special image in a case in which the areas matching the special pattern exceeds a predetermined ratio with respect to an area of the image.

Even with a method other than the method using the special pattern (prohibition pattern PP), the discrimination section may detect information indicating that the image is the special image in combination with edge detection and pattern matching. Alternatively, in a case in which the information indicating that the image is the special image is characters, the discrimination section may detect the information with optical character recognition.

Further, in the foregoing embodiments, the image to which the image processing is never carried out after being read by the scanner 40 is used as the image used for the discrimination by the discrimination sections 360 to 362. However, the present invention emits the effect if the discrimination section executes the discrimination on the basis of the image different from the image, acquired by the image acquisition section 310, to which the image processing is carried out by the image processing sections 330 to 332. For example, after the scanner 40 reads the document, even if the image is subjected to the image processing by the MFP controller 10, the present invention emits the effect if the discrimination is executed with the image different from the image to which the image processing is carried out by the image processing section 330.

Each of the image processing sections 330 to 332 of the foregoing embodiments 1 to 3 includes the color conversion section 3310, the filter processing section 3320, the density adjustment section 3330 and the ground adjustment section 3340. However, the image processing section does not necessarily include all of the color conversion section 3310, the filter processing section 3320, the density adjustment section 3330 and the ground adjustment section 3340. Furthermore, if the filter processing section 3320, the density adjustment section 3330 and the ground adjustment section 3340 carry out the image processing, the degree of the decrease in the discrimination accuracy is large. Thus, in a case in which the image processing section includes one of the filter processing section 3320, the density adjustment section 3330 and the ground adjustment section 3340, the effect is larger than that in a case in which no section is included.

Further, in the MFP 1 of the foregoing embodiments 1 to 3, the special processing section 110 executes the special processing (prohibition control) in response to the output result of the discrimination output section 3420. However, the present invention is not limited to this; a constitution in which the discrimination processing apparatus executes the prohibition control may be adopted. For example, the discrimination processing apparatus may cancel the output of the image for formation in a case of discriminating that the image is the prohibition image in the processing in Act A208 in Fig. 5. Otherwise, a constitution in which the discrimination processing apparatus includes a constitution corresponding to the special processing section 110 may be adopted.

Furthermore, in the foregoing embodiments 1 to 3, the discrimination processing apparatus outputs the image for formation to the MFP controller 10. However, the present invention is not limited to this; the discrimination processing apparatus may control to output the image for formation to the image forming apparatus 50 to form the image to which the image processing is carried out on the print medium by the image forming apparatus 50. Furthermore, the discrimination processing apparatus outputs the thumbnail image to the MFP controller 10. However, the present invention is not limited to this; the discrimination processing apparatus may control to output the thumbnail image to the display device 220 to display the thumbnail image on the display device 220.

In the foregoing embodiments 1 to 3 and the modification, as an object that is discriminated as the special image or not, the image of the document scanned by the scanner 40 is described as an example. However, the present invention is not limited to this; an image acquired from an external device via the communication device 70 or the I/O section 305 may be set to the discrimination object.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope and framework of the invention.

## Claims

1. An information processing apparatus, comprising:
an acquisition section configured to acquire an image;
an image processing section configured to carry out an image processing on the image acquired by the acquisition section;
an image output section configured to output the image to which the image processing is carried out by the image processing section;
a discrimination section configured to discriminate whether or not the image acquired by the acquisition section comprises a special image on the basis of the image, acquired by the acquisition section, which is different from the image to which the image processing is carried out by the image processing section; and
a discrimination output section configured to output a discrimination result of the discrimination section.

2. The information processing apparatus according to claim 1, further comprising:
a generation section configured to generate an image obtained by reducing resolution of the image, acquired by the acquisition section, which is different from the image to which the image processing is carried out by the image processing section, wherein
the discrimination section discriminates whether or not the acquired image is the special image on the basis of the image generated by the generation section.

3. The information processing apparatus according to claim 1 or 2, wherein the image processing section comprises at least one of
a filter processing section which carries out a filter processing,
a density adjustment section which carries out a density adjustment, and
a ground adjustment section which carries out a ground adjustment.

4. The information processing apparatus according to claim 2, further comprising:
a thumbnail output section configured to output the image generated by the generation section as a thumbnail image.

5. The information processing apparatus according to any one of claims 1 to 4, wherein
the discrimination result is sent to a special processing section that restricts start of image formation of a copy-prohibited document even if there is an input for instructing copy from a user.

6. The information processing apparatus according to any one of claims 1 to 5, wherein
the special image comprises a prohibition image that is copy-prohibited.

7. An image forming apparatus, comprising the information processing apparatus according to any one of claims 1 to 6, wherein:
the acquisition section configured to acquire an image of a document;
the image output section comprises a forming section configured to form the image to which the image processing is carried out by the image processing section on a medium; and
the discrimination output section comprises a control section configured to carry out special control to the forming section if the discrimination section discriminates that the acquired image is the special image.

8. An information processing system, comprising:
an acquisition means configured to acquire an image;
an image processing means configured to carry out an image processing on the image acquired by the acquisition means;
an image output means configured to output the image to which the image processing is carried out by the image processing means;
a discrimination means configured to discriminate whether or not the image acquired by the acquisition means comprises a special image on the basis of the image, acquired by the acquisition means, which is different from the image to which the image processing is carried out by the image processing means; and
a discrimination output means configured to output a discrimination result of the discrimination means.

9. An image forming system, comprising the information processing system according claim 8, wherein:
the acquisition means configured to acquire an image of a document;
the image output means comprises a forming means configured to form the image to which the image processing is carried out by the image processing means on a medium;
and
the discrimination output section comprises a control means configured to carry out special control to the forming means if the discrimination means discriminates that the acquired image is the special image.

10. An information processing method, comprising:
acquiring an image;
carrying out an image processing on the image acquired;
outputting the image to which the image processing is carried out;
discriminating whether or not the image acquired comprises a special image on the basis of the acquired image, which is different from the image to which the image processing is carried out; and
outputting a discrimination result.

11. The information processing method according to claim 10, further comprising:
generating an image obtained by reducing resolution of the acquired image, which is different from the image to which the image processing is carried out; and
discriminating whether or not the acquired image is the special image on the basis of the image generated.

12. The information processing method according to 10 or 11, wherein image processing comprises at least one of
filter processing which carries out a filter processing,
density adjusting which carries out a density adjustment, and
ground adjusting which carries out a ground adjustment.

13. The information processing method according to claim 11 or 12, further comprising:
outputting the generated image as a thumbnail image.

14. The information processing method according to any one of claims 10 to 13, further comprising:
restricting start of image formation of a copy-prohibited document even if there is an input for instructing copy from a user.

15. The information processing method according to any one of claims 10 to 14, wherein
the special image comprises a prohibition image that is copy-prohibited.
